# EUROPEAN PATENT APPLICATION

(11) **EP 1 197 352 A2**
(43) Date of publication of application: **17.04.2002**
(21) Application number: 01308801.8
(22) Date of filing: 16.10.2001
(51) Int. Cl.: B60B 27/00

(54) **Wheel hub and method of forming a wheel hub assembly**

(30) Priority: 16.10.2000 US 688502
(71) Applicant: Meritor Heavy Vehicle Technology LLC, Troy, Michigan 48084 (US)
(72) Inventor: Basham, John A., Fairborn, Ohio 45324 (US)
(74) Representative: Jones, John Bryn

(57) **Abstract**

A heavy vehicle wheel hub (10) assembly formed from sheet steel stampings. A generally cylindrical barrel (12) is formed and machined to create bearing cups (58,60). An inner (32) and outer (34) hub wall are formed from sheet steel stampings. The hub walls are positioned and welded to the exterior surface of the hub barrel (12), the hub walls also contact each other at a contact surface. A plurality of holes (44) are punched into the hub walls at the contact surface, and align when the hub walls are assembled. Inner and outer bearing mounts are press fit into the bearing cups. An annular hubcap retaining groove (66) is machined on the outer portion of the wheel barrel proximate to the outer end.

## Description

### BACKGROUND OF THE INVENTION

The present invention relates to a wheel hub and a method of forming a wheel hub assembly. More particularly, the present invention relates to a heavy vehicle wheel hub made from sheet steel stampings and a method of forming a wheel hub assembly from sheet steel stampings and a method of forming a wheel hub assembly from sheet steel stampings.

Prior art heavy vehicle wheel hubs are conventionally formed or cast of steel. The wheel hub is rotatable connected to an axle, and an integrally formed flange is formed around the wheel hub to connect to a tire. However, there are many drawbacks to utilizing a wheel hub formed of cast steel. For one, casting a wheel hub is an expensive process. Additionally, the shape of a cast wheel hub is limited. There is little control over the shapes that can be achieved because the shape of the wheel hub is determined by the predetermined shape of the cast.

Prior art heavy vehicle wheel hubs have also been formed from flat metal sheets. However, these prior art wheel hubs have utilized only one flange attached to the exterior of the hub barrel, or have employed flanges which are a continuous part of the hub barrel.

Hence, there is a need in the art for an improved heavy vehicle wheel hub made from sheet steel stampings.

### SUMMARY OF THE INVENTION

The present invention relates generally to a heavy vehicle wheel hub made from sheet steel stampings.

A generally cylindrical wheel barrel is formed from sheet steel stampings and is machined to create an inner portion, an outer portion, and a recessed intermediate portion positioned therebetween. An inner shoulder and an outer shoulder connect the inner portion and the outer portion, respectively, to the intermediate portion.

An inner hub wall and an outer hub wall are also formed from sheet steel stampings. Each hub wall is formed to include a barrel flange and a rim flange, which are substantially perpendicular to each other. A plurality of holes are punched into the rim flanges.

The hub walls are positioned on the exterior surface of the hub barrel such that the inner and outer barrel flanges contact the exterior surface of the inner and outer hub barrel, respectively, and the hub flanges contact each other. The hub walls are also positioned such that the holes align to receive a plurality of serrated bolts.

The hub walls are attached to the hub barrel by a weld bead which runs along the point of contact of the edges of the barrel flanges and the exterior surface of the barrel. Inner and outer bearing mounts are press fit into inner and outer bearing cups, respectively. An annular hubcap retaining groove is machined on the outer edge of the wheel barrel. The wheel hub assembly is completed by pressing a plurality of serrated bolts into the aligned holes of the hub walls.

Accordingly, the present invention provides a heavy vehicle wheel hub made from sheet steel stampings.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 illustrates a side view of a cylindrical wheel hub barrel formed from a sheet steel stamping.
Figure 2 illustrates a side view of a machined cylindrical wheel hub barrel formed from a sheet steel stamping.
Figure 3 illustrates a front view of a formed sheet steel stamping inner hub wall.
Figure 4 illustrates a side view of a formed sheet steel stamping inner hub wall.
Figure 5 illustrates a side view the wheel hub assembly of the present invention.

### DETAILED DESCRIPTION OF THE PREFERRED EMBODIMENT

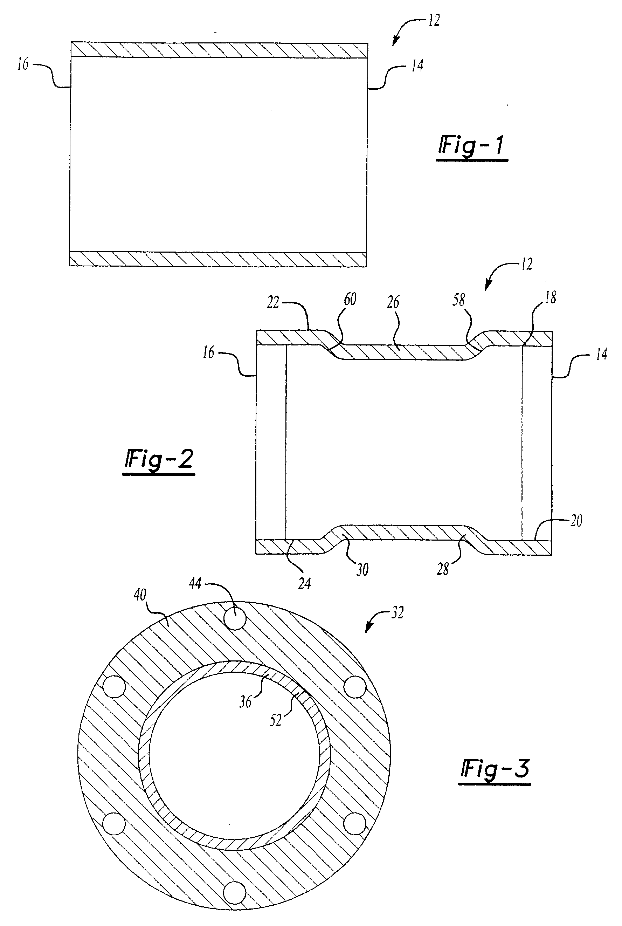

As shown in Fig. 1, a substantially rectangular sheet steel stamping is welded along opposite edges to create a generally cylindrical wheel barrel 12. The wheel barrel 12 has an inner end 14 and an outer end 16.

As shown in Fig. 2, the wheel barrel 12 is machined such that there is an inner portion 18 with an inner interior annular wall surface 20, an outer portion 22 with an outer interior annular wall surface 24, and a recessed intermediate portion 26 positioned therebetween. The intermediate portion 26 has a diameter less than the diameter of the inner portion 18 and the outer portion 22 and is connected to the inner portion 18 and the outer portion 22 by an annular inner shoulder 28 and an annular outer shoulder 30, respectively.

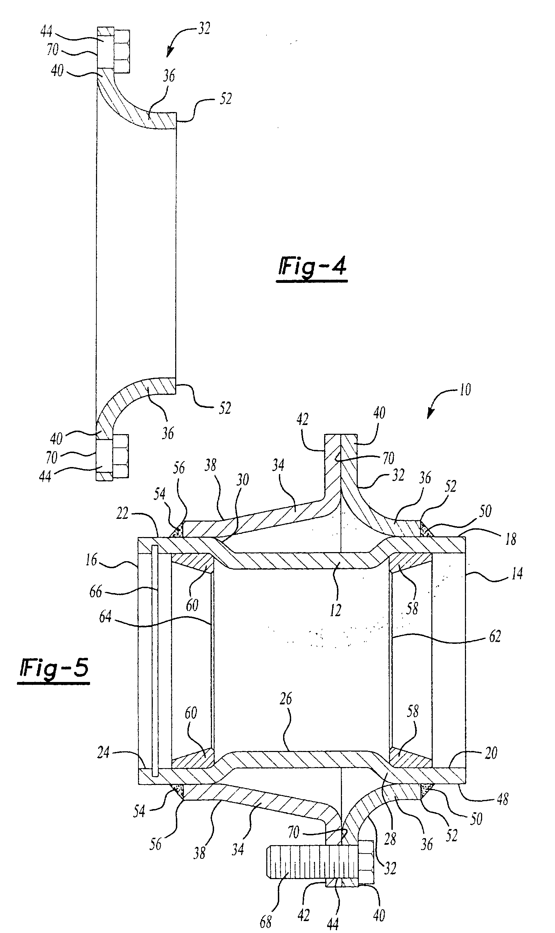

Hub walls 32, 34 are also formed from sheet steel stampings. Figs. 3 and 4 illustrate the inner hub wall 32; however, the formation of the outer hub wall 34 is substantially similar to the inner hub wall 34 and follows the same method of formation. The inner hub wall 32 and the outer hub wall 34 are both formed such that they have a barrel flange 36, 38, respectively, and a substantially perpendicular rim flange 40, 42, respectively. In the preferred embodiment, the outer barrel flange 38 is greater in length than the inner barrel flange 36 such that when assembled, the substantially contacting rim flanges 40, 42 are more proximate to the inner end 14 than the outer end 16 of the wheel barrel 12. However, the length of the inner rim flange 40 is substantially equal to the length of the outer rim flange 42. A plurality of holes 44 are punched into the rim flanges 40, 42 and are located such that the holes 44 are aligned when the inner hub wall 32 and outer hub wall 34 are assembled.

After the hub walls 32, 34 are formed into the desired shape, the walls 32, 34 are positioned on the exterior surface 48 of the barrel 12, as shown in Fig. 5. The inner hub wall 32 is positioned on the inner end 14 of the hub barrel 12 such that the inner barrel flange 36 substantially contacts the exterior surface 48 of the inner end 14 of the hub barrel 12. The outer hub wall 34 is positioned on the outer end 16 of the hub barrel 12 such that the outer barrel flange 38 substantially contacts the exterior surface 48 of the outer end 16 of the hub barrel 12. The inner hub wall 34 and the outer hub wall 36 substantially contact each other at contact surface 70. Because the length of the outer barrel flange 38 is greater than the length of the inner barrel flange 36, the contact surface 70 is more proximate to the inner end 14 than the outer end 16. Furthermore, the inner hub wall 32 and the outer hub wall 34 are positioned such that the punched holes 44 substantially align to receive a plurality of serrated bolts 68.

The inner hub wall 32 and the outer hub wall 34 are welded to the exterior surface 48 of the hub barrel 12. An inner bead of welding 50 is applied along the edge 52 of the inner barrel flange 36 of the inner hub wall 32, securing the inner hub wall 32 to the exterior surface 48 of the hub barrel 12. An outer bead of welding 54 is applied along the edge 56 of the outer barrel flange 38 of the outer hub wall 34, also securing the outer hub wall 34 to the exterior surface 48 of the hub barrel 12

The hub barrel 12 further includes an inner bearing cup 58 and an outer bearing cup 60. The inner bearing cup 58 is created by the inner shoulder 28 and the inner interior wall surface 20 of the inner portion 18, and the outer bearing cup 60 is created by the outer shoulder 30 and the outer interior wall surface 24 of the outer portion 22. An inner bearing mount 62 and an outer bearing mount 64 are press fit into the inner 58 and outer bearing cup 60, respectively. In one embodiment, an inner bearing assembly and an outer bearing assembly (not shown) preferably press fit into and substantially abut the inner bearing cup 58 and outer bearing cup 60 respectively, and thereby provide a complete hub assembly.

An annular hubcap retaining groove 66 is machined on the outer portion 22 of the wheel barrel 12 proximate to the outer end 16. The hubcap retaining groove 66 retains a hubcap, which is later installed. The wheel hub assembly 10 is completed by pressing in a plurality of serrated bolts 68 which are inserted into the aligned holes 44 of the inner 32 and outer hub wall 34.

There are several advantages for utilizing a wheel hub made from weldment of sheet steel stampings. For one, sheet steel stampings are created from a more uniform homogeneous material than cast materials. The process of stamping sheet steel is more controllable, allowing for shapes that are not available by casting. It is also more cost efficient to machine weld assembled stampings.

Accordingly, the present invention relates generally to a heavy vehicle wheel hub made from sheet steel stampings

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described. For that reason the following claims should be studied to determine the true scope and content of this invention.

## Claims

1. A wheel hub (10) formed from sheet steel stampings comprising:
a substantially cylindrical barrel (12) having an exterior surface, an inner portion (18) and an outer portion (22);
an annular inner flange (36) fixedly attached to said exterior surface of said inner portion of said barrel; and
an annular outer flange (38) fixedly attached to said exterior surface of said outer portion of said barrel, and said outer flange substantially contacting said inner hub flange at a contacting surface (70).

2. The wheel hub as recited in Claim 1 wherein said inner flange includes an inner annular barrel flange (36) and a substantially perpendicular inner annular hub flange, and said outer flange includes and outer annular barrel flange (38) and a substantially perpendicular outer annular hub flange, said inner annular barrel flange and said outer annular barrel flange being fixedly secured to said exterior surface of said barrel and said inner annular hub flange, and said outer annular hub flange substantially contacting each other at said contacting surface.

3. The wheel hub as recited in Claim 1 or Claim 2 wherein said inner flange further includes at least one inner aperture and said outer flange further includes at least one outer aperture positioned to coincide with said at least one inner aperture, said at least one inner aperture and said at least one outer aperture being substantially aligned when said inner flange and said outer flange are fixedly attached to said exterior surface of said barrel.

4. The wheel hub as recited in any preceding Claim wherein a groove (66) is machined substantially proximate to an outer edge on said outer portion of said wheel barrel, said machined groove for retaining a hub cap.

5. The wheel hub as recited in any preceding Claim wherein said inner flange and said outer flange are fixedly attached to said exterior surface of said barrel by a line of welding (52, 54).

6. The wheel hub as recited in any preceding Claim wherein said barrel further comprises an intermediate recessed portion (26) positioned between said inner portion and said outer portion forming an inner annular bearing cup (58) and an outer annular bearing cup (60), respectively.

7. The wheel hub as recited in any preceding Claim wherein an inner bearing assembly and an outer bearing assembly are press fit into and substantially abut said inner bearing cup and said outer bearing cup, respectively.

8. A wheel hub assembly incorporating the wheel hub as recited in any one of claims 1 to 6 and a bearing assembly.

9. A wheel hub assembly as recited in Claim 8 when dependent upon Claim 6 wherein the bearing assembly comprises an inner bearing assembly and an outer bearing assembly which are press fit and substantially abut said inner bearing cup and said outer bearing cup, respectively.

10. A method of forming a wheel hub assembly from sheet steel stampings comprising the steps of:
forming a substantially cylindrical barrel (12) from a sheet steel stamping such that said barrel has an exterior surface, an inner portion (18), an outer portion (22), a recessed intermediate portion positioned therebetween, an inner bearing cup (58), and an outer bearing cup (60);
forming an inner flange having an at least one inner aperture;
forming an outer flange having an at least one outer aperture positioned to coincide with said at least one inner aperture;
securing said inner flange to said exterior surface of said inner portion of said barrel;
securing said outer flange to said exterior surface of said outer portion of said barrel so that said at least one outer aperture is substantially aligned with said at least one inner aperture;
machining a groove (66) machined substantially proximate to an outer edge (16) on said outer portion of said wheel barrel, said machined groove for retaining a hub cap; and
inserting an inner bearing assembly and an outer bearing assembly into said inner bearing cup and said outer bearing cup, respectively, so that said inner bearing and said outer bearing are press fit and substantially abut said inner bearing cup and said outer bearing cup.
